Europäisches Patentamt

European Patent Office

Office européen des brevets

(11) Veröffentlichungsnummer: **0 415 040 A2**

# EUROPÄISCHE PATENTANMELDUNG

(21) Anmeldenummer: **90113219.1**

(22) Anmeldetag: **11.07.90**

(51) Int. Cl.⁵: **B23B 31/16**

(30) Priorität: **01.09.89 DE 3929010**

(43) Veröffentlichungstag der Anmeldung:
**06.03.91 Patentblatt 91/10**

(84) Benannte Vertragsstaaten:
**DE FR IT**

(71) Anmelder: **SMW Schneider & Weisshaupt GmbH**
**Wiesentalstrasse 28**
**W-7996 Meckenbeuren(DE)**

(72) Erfinder: **Hiestand, Karl**
**Mühlweg 2**
**W-7798 Pfullendorf(DE)**

(74) Vertreter: **Engelhardt, Guido, Dipl.-Ing.**
**Patentanwalt Montafonstrasse 35 Postfach 1350**
**W-7990 Friedrichshafen 1(DE)**

(54) **Haltevorrichtung.**

(57) Bei einer Vorrichtung (1) zur Halterung eines Werkstückes (10) auf einer Drehmaschine (2) mittels eines an einer Aufnahmescheibe (42) als Spannkörper (41) angebrachten Spannfutters (3) sind dem Spannkörper (41) gesonderte Stellelemente (11) zugeordnet, die unabhängig voneinander elektrisch, pneumatisch oder hydraulisch betätigbar und/oder ansteuerbar sind. Zum Ausrichten des Werkstückes (10) wirken die Stellelemente (11) auf den Spannkörper (41) ein.

Durch diese Ausgestaltung ist es möglich, den Spannkörper selbst definiert zu verstellen, so daß das eingespannte Werkstück (10) leicht ausgerichtet werden kann.

FIG. 1 a

EP 0 415 040 A2

*FIG. 1b*

# HALTEVORRICHTUNG

Die Erfindung bezieht sich auf eine Vorrichtung zur Halterung eines auf einer Drehmaschine, insbesondere einer Schleifmaschine, zu bearbeitenden Werkstückes, das mittels eines als Aufnahmescheibe, als mit antreibbaren in einem Gehäuse eingesetzten Spannbacken versehene Spannfutter, als Spanndorn oder dgl. ausgebildeten Spannkörpers gehalten ist.

Spannvorrichtungen sind in zahlreichen unterschiedlichen Ausgestaltungen als zentrisch und auch als ausgleichend spannendes Kraftspannfutter bekannt. Zur Betätigung der Spannbacken dient hierbei entweder jeweils ein allen Spannbacken gemeinsames zentrales Antriebsglied, oder es sind, um auch unrunde Werkstücke einspannen zu können, den Spannbacken von Druckmittel beaufschlagbare Stellkolben zugeordnet, deren Druckräume gemeinsam an eine Druckmittelquelle angeschlossen sind, so daß in diesen jeweils der gleiche Druck herrscht. Eine individuelle Verstellung oder eine definierte Einstellung eines einzelnen ausgewählten Spannbackens ist somit bei keinem der bekannten Kraftspannfutter durchführbar.

Aufgabe der Erfindung ist es daher, eine Vorrichtung zur Halterung eines auf einer Drehmaschine zu bearbeitenden Werkstückes der vorgenannten Art zu schaffen, bei der es möglich ist, den Spannkörper selbst und/oder dessen Spannbacken einzeln und unabhängig voneinander zu betätigen und definiert zu verstellen, so daß ein eingespanntes Werkstück, falls dies erforderlich sein sollte, leicht ausgerichtet werden kann. Der dazu erforderliche Bauaufwand soll gering gehalten werden, auch soll die Vorrichtung klein bauen, um vielseitig eingesetzt werden zu können, dennoch sollen eine hohe Betriebssicherheit sowie eine lange Lebensdauer gegeben sein. Vor allem aber soll erreicht werden, daß der Spannkörper und/oder dessen Spannbacken in Abhängigkeit von dem Rundlauf und/oder dem Planlauf des eingespannten Werkstückes programmgesteuert individuell und äußerst genau auch in sehr kleinen Maßeinheiten verstellt und ausgerichtet werden können.

Gemäß der Erfindung wird dies dadurch erreicht, daß der Spannkörper und/oder dessen Spannbacken und/oder den Betätigungsgliedern der Spannbacken gesonderte Stellelemente zugeordnet sind, die unbahängig voneinander elektrisch, pneumatisch oder hydraulisch betätigbar und/oder ansteuerbar sind und zum Ausrichten und/oder Einspannen des Werkstückes unmittelbar oder über Zwischenglieder auf den Spannkörper, dessen Spann backen und/oder deren Betätigungsglieder einwirken.

Die Stellelemente können in einfacher Ausgestaltung durch drei parallel zur Längsachse des Spannkörpers und jeweils um 120° zueinander versetzt angeordnete Schritt- oder Stellmotore gebildet werden, deren Verdrehbewegungen über Getriebemittel in radiale Verstellbewegungen umlenkbar sind.

Hierbei ist es angebracht, die Schritt- oder Stellmotore in einem auf der Rückseite des Maschinenspindelstockes angeordneten Gehäuse einzusetzen und diesen jeweils eine verdrehbar gelagerte und durch diese antreibbare Gewindespindel zuzuordnen, deren Verdrehbewegungen mittels einer Mutter, die fest mit einer durch den Maschinenspindelstock hindurchgeführten Zugstange verbunden ist, in eine axiale Verstellbewegung umsetzbar ist, wobei die von den Stellmotoren angetriebene Welle über eine als Sicherheitsüberlaufkupplung wirkende Federraste mit der Gewindespindel in Triebverbindung stehen sollte.

Des weiteren sollten die Zugstangen jeweils mit einem achssenkrecht zu diesen angeordneten, in einem auf der Vorderseite des Maschinenspindelstockes in einem Gehäuse eingesetzten Zahnrad in Triebverbindung stehen, mittels denen je ein auf den Spannkörper einwirkendes Verstellglied betätigbar ist, die jeweils durch eine in einer Gewindebohrung in deren Achsrichtung verstellbare und tangential zu einem Grundkreis angeordnete Gewindespindel ausgebildet sein sollte, die unmittelbar oder z. B. über Kugeln als Zwischenglieder auf den Spannkörper einwirken.

Um Fertigungstoleranzen auf einfache Weise ausgleichen zu können, sollte den über Keilverzahnungen oder dgl. verschiebbar in den Zahnrädern geführten Gewindespindeln oder den von diesen verschiebbaren Zwischengliedern jeweils ein in dem Spannkörper eingeschraubter verstellbarer Justierbolzen zugeordnet sein.

Der Spannkörper ist zweckmäßigerweise als radial verstellbar gelagerte in dem die Zahnräder und die Gewindespindeln aufnehmenden Gehäuse eingesetzte Aufnahmescheibe ausgebildet, an der das Werkstück unmittelbar oder mittels eines Spannfutters oder dgl. als Zwischenglied gehalten ist.

Zur radialen verstellbaren Lagerung der Aufnahmescheibe ist es angebracht, einen Mitnahmering vorzusehen, durch den mittels zweier einander gegenüberliegend angeordneter Nutensteine das Gehäuse und mittels zweier weiterer um 90° versetzt angeordnet er Nutensteine die Aufnahmescheibe verdrehfest und radial verstellbar miteinander verbunden sind.

Sehr zweckmäßig ist es ferner, die Stellelemente durch piezoelektrische Blocktranslatoren zu bilden.

Nach einer andersartigen Ausgestaltung können als Stellelemente auch elektrisch, pneumatisch oder hydraulisch ansteuerbare Schritt- oder Stellmotore vorgesehen werden, deren Abtriebswellen jeweils über eine Gewindespindel mit einem radial oder axial verstellbaren auf das Betätigungsglied der Spannbacken oder auf einen Spannbacken einwirkendes Zwischenglied verbunden sind.

Vorteilhaft ist es des weiteren, die Stellelemente in radial gerichteten Ausnehmungen des Gehäuses einzusetzen und jeweils über einen gelenkig gelagerten Kipphebel als Zwischenglied mit den Spannbacken trieblich zu verbinden, wobei den als piezoelektrische Blocktranslatoren ausgebildeten Stellelementen ein radial verschiebbares Druckstück zugeordnet sein sollte, das über ein Gelenkstück z.B. in Form einer Rolle oder dgl. mit dem inneren Ende des Kipphebels in Triebverbindung steht.

Zum planparallelen Ausrichten des Werkstückes ist es angezeigt, die Stellelemente in achsparallelen Ausnehmungen des Gehäuses einzusetzen und auf die den Spannbacken jeweils zugeordneten Zwischenglieder einwirken zu lassen.

Bei einer mit Kipphebel als Zwischenglieder versehenen Spannvorrichtung können, um eine Axialverstellung vorzunehmen, die Kipphebel entgegen der Kraft einer Feder jeweils mittels eines als piezoelektrischer Blocktranslator ausgebildeten Stellelementes parallel zur Längsachse des Gehäuses verstellbar sein, in dem die Kipphebel in einer entgegen der Kraft der Feder verschiebbar gehaltenen Lagerschale eingesetzt sind.

Bei einer als Spanndorn ausgebildeten Haltevorrichtung ist es angebracht, die Stellelemente in radial gerichteten Ausnehmungen des Gehäuses einzusetzen und jeweils über ein der Außenmantelfläche des Spanndorns angepaßtes Druckstück als Spannbacken unmittelbar auf das Werkstück einwirken zu lassen. Bei dieser Ausgestaltung können, damit das Werkstück auch in Längsrichtung auszurichten ist, gegebenenfalls zwei oder mehrere Spannbacken oder Stellelemente in Achsrichtung des Spanndorns hintereinander angeordnet sein.

Bei auf das Betätigungsglied der Spannbacken einwirkenden Stellelementen sollten diese diametral den Spannbacken gegenüberliegend in dem Gehäuse angeordnet sein und über Gleitstücke oder dgl. auf das vorzugsweise pendelnd gelagerte Betätigungsglied der Spannbacken einwirken.

Die Stellelemente können gemeinsam oder einzeln elektrisch, pneumatisch oder hydraulisch angesteuert werden. Selbstverständlich ist es angezeigt, die Stellelemente in Abhängigkeit von dem Rundlauf und/oder dem Planlauf des Werkstückes elektrisch, pneumatisch oder hydraulisch anzusteuern.

Zur Ermittlung des Rundlaufes und/oder des Planlaufes eines eingespannten Werkstückes kann jeweils ein durch dieses steuerbarer Taster vorgesehen werden und das Gehäuse der Vorrichtung sollte mit einer Drehwinkelmeßeinrichtung ausgestattet sein. Des weiteren sind die Steuersignale der Taster und der Drehwinkelmeßeinrichtung, die aus einem oder mehreren in das Gehäuse eingesetzten Impulsgebern, beispielsweise in Form von in dieses eingearbeiteten Bohrungen oder aufgesetzten Nocken, und einem ortsfest angeordneten Empfänger bestehen kann, in einer Recheneinheit auszuwerten, um kurzfristig entsprechende Korrekturen vornehmen zu können.

Wird eine Vorrichtung gemäß der Erfindung ausgebildet, in dem dem Spannkörper und/oder dessen Spannbacken und/oder den Betätigungsgliedern unabhängig voneinander betätigbare Stellglieder zugeordnet werden, so ist es nicht nur möglich, ein Werkstück entsprechend den jeweiligen Gegebenheiten gewissermaßen beliebig auf einer Drehmaschine aufzuspannen, sondern dieses kann auch im eingespannten Zustand in einer, zwei oder drei Achsen ohne Schwierigkeiten ausgerichtet werden. Da die Stellglieder einzeln betätigbar sind, kann somit jedem Spannbacken mehr oder weniger Bewegungsenergie zugeführt werden, ein exakter Rund- und/oder Planlauf einer Fläche des eingespannten Werkstückes kann demnach durch eine gezielte Verstellung des Spannkörpers und/oder der Spannbacken bewerkstelligt werden.

Als Stellelemente eignen sich elektrische Stellmotoren und/oder hydraulisch oder pneumatisch betätigbare Servoeinrichtungen, in besonderer Weise aber auch Piezotranslatoren, die eine große Einstellgenauigkeit aufweisen und bei stufenloser Lageänderung in Abhängigkeit von der angelegten Spannung auch große Kräfte erzeugen. Mittels der piezoelektrischen Keramikscheiben zugeführter elektrischer Energie kann somit der Verstellweg der Spannbacken problemlos geändert und die Einspannlage eines Werkstückes korrigiert werden. Der Verstellbereich eines derartigen in einer Spannvorrichtung einbaubaren Translators beträgt zwar nur etwa 1 mm, um ein Werkstück z.B. auf einer Schleifmaschine einzuspannen und/oder auszurichten, ist ein derartiger Verstellweg eines Spannbackens aber ausreichend.

Bei einfacher konstruktiver Ausgestaltung und damit wirtschaftlicher Herstellung ist demnach eine Haltevorrichtung geschaffen, die es ermöglicht, alle Elastizitäten der an der Einspannung eines Werkstückes beteiligten Bauteile ohne Schwierigkeiten auszugleichen und das Werkstück selbst im eingespannten Zustand auszurichten. Selbstverständlich ist aber auch eine zentrische oder ausgleichende Einspannung eines Werkstückes, und zwar auch innerhalb eines großen Verstellbereiches der Spannbacken zu bewerkstelligen.

In der Zeichnung sind einige Ausführungsbeispiele der gemäß der Erfindung ausgebildeten Vorrichtung dargestellt, die nachfolgend im einzelnen erläutert sind. Hierbei zeigt:

Figur 1 a und Figur 1 b eine auf der Vorderseite und der Rückseite eines Maschinenspindelstokkes angebrachte Vorrichtung zur radialen Verstellung eines Spannkörpers,

Figur 2 einen achssenkrechten Schnitt durch den an der Vorderseite des Maschinenspindelstockes angeordneten Teil der Vorrichtung nach der Linie II-II der Figur 1 b,

Figur 3 eine als Kipphebelfutter ausgebildete Spannvorrichtung mit als Stellmotore ausgebildete auf das Betätigungsglied einwirkende Stellglieder im Axialschnitt,

Figur 4 ein Kraftspannfutter mit als pneumatisch ansteuerbare Stellmotore ausgebildeten den Spannbacken zugeordneten Stellelementen,

Figur 5 eine mit piezoelektrischen Translatoren als auf die Spannbacken einwirkende Stellglieder versehene Spannvorrichtung im Axialschnitt,

Figur 6 die Spannvorrichtung nach Figur 5 mit zusätzlich zur Axialverstellung vorgesehenen Stellgliedern,

Figur 7 die Spannvorrichtung nach Figur 5 mit in einem Betätigungsglied angeordneten Stellgliedern,

Figur 8 eine als Spanndorn ausgebildete Spannvorrichtung in Ansicht,

Figur 9 einen Schnitt durch den Spanndorn nach Figur 8 und

Figur 10 eine als Keilhakenfutter ausgebildete Spannvorrichtung mit auf das Betätigungsglied der Spannbacken einwirkenden piezoelektrischen Translatoren als Stellglieder im Axialschnitt.

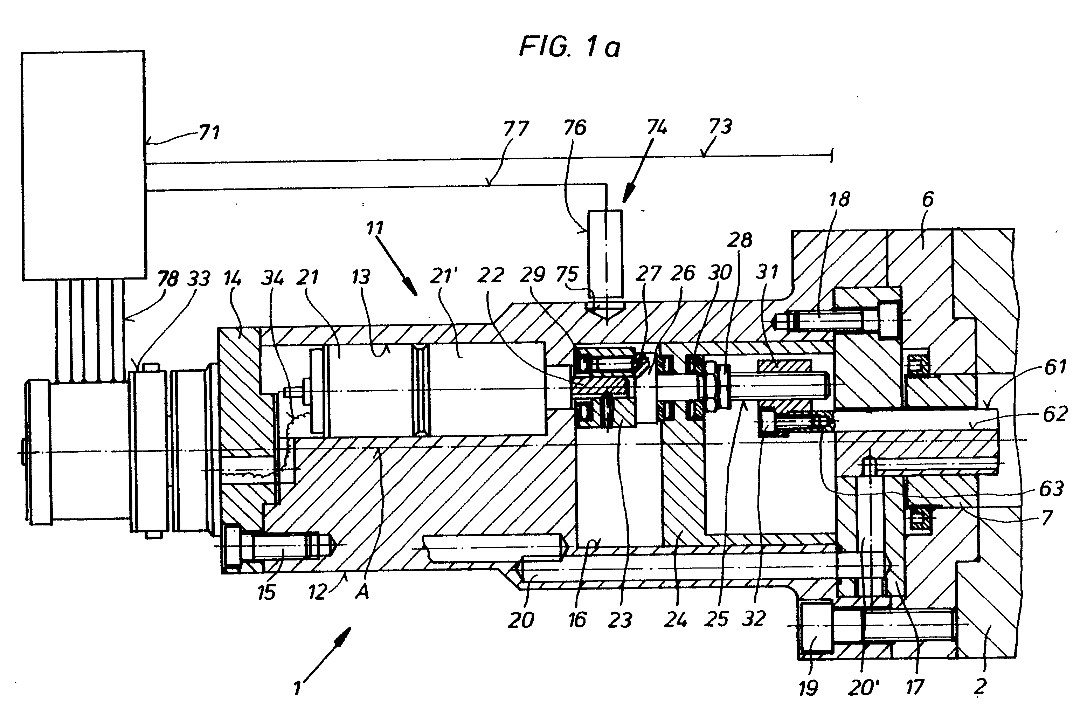

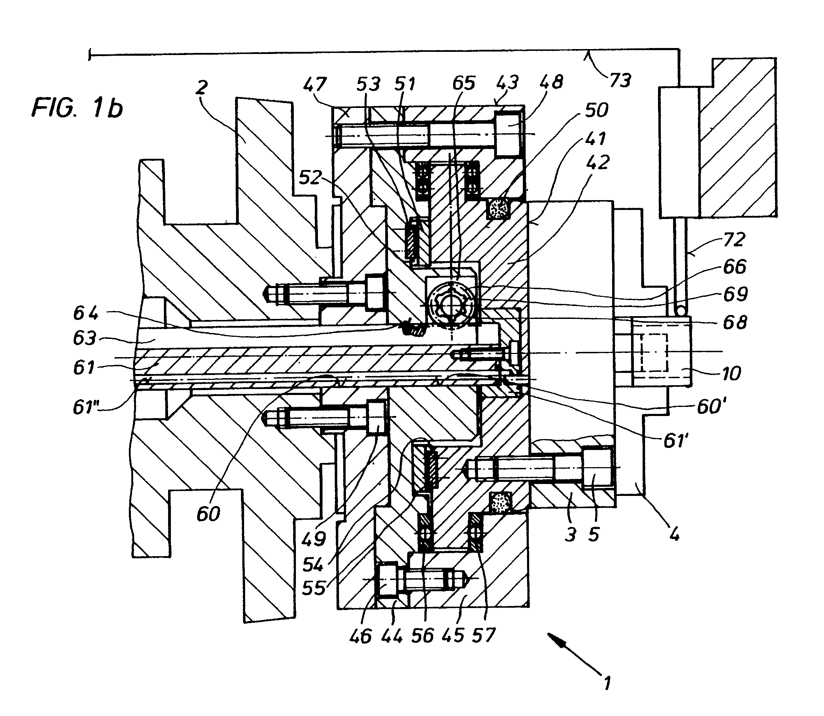

Die in den Figuren 1 a und 1 b dargestellte und mit 1 bezeichnete Vorrichtung dient zur Halterung eines Werkstückes 10 an einem Maschinenspindelstock 2 einer Drehmaschine mittels eines Kraftspannfutters 3, zwischen dessen radial verstellbaren Spannbacken 4 das Werkstück 10 eingespannt ist. Um das Werkstück 10 in radialer Richtung ausrichten zu können, ist das Spannfutter 3 mittels Schrauben 5 an einem auf der Vorderseite des Maschinenspindelstockes 2 angeordneten Spannkörper 41 befestigt, der radial verstellbar gelagert ist.

Zur gesteuerten Radialverstellung des als Aufnahmescheibe 42 ausgebildeten und in einem Gehäuse 43 eingesetzten Spannkörpers 41 sind auf der Rückseite des Maschinenspindelstockes 2 in einem Gehäuse 12 drei Stellglieder 11 vorgesehen, die parallel zur Drehachse A des Maschinenspindelstockes 2 und um 120° zueinander versetzt angeordnet sind. Die Stellglieder 11 sind hierbei als elektrische Stellmotore 21 ausgebildet, die in in das Gehäuse 12 eingearbeitete Ausnehmungen 13 eingesetzt sind und über Getriebemittel auf den Spannkörper 41 einwirken. Durch einen Deckel 14, der mittels Schrauben 15 an dem Gehäuse 12 befestigt und an dem ein Drehverteiler 33 angebracht und die Versorgungsleitungen 34 der Stellmotore 21 hindurchgeführt sind, sind die Ausnehmungen 13 verschlossen.

Die Umwandlung der Drehbewegungen der Stellglieder 11 in axiale Verstellbewegungen wird jeweils mittels einer Gewindespindel 25 und einer auf dieser angeordneten Mutter 31 bewerkstelligt, die über eine Schraube 32 an einer durch den Maschinenspindelstock 2 hindurchgeführten Zugstange 63 befestigt ist. Die Gewindespindeln 25 sind hierbei in einen in einer weiteren Ausnehmung 16 des Gehäuses 12 angeordneten Träger 24 mittels Lager 30 drehbar gelagert und durch einen angeformten Bund 26 sowie durch Kontermuttern 28 gehalten. Die Triebverbindung der mit Getrieben 21′ versehenen Stellmotore 21 mit den Gewindespindeln 25 erfolgt über eine auf einer angetriebenen Welle 22 drehfest angebrachten und mittels eines Lagers 29 an dem Gehäuse 12 abgestützten Hülse 23, in die eine mit dem Bund 26 zusammenwirkende Federraste 27 eingesetzt ist. Auf diese Weise ist eine Überlastsicherung gegeben.

Die den Träger 24 aufnehmende Ausnehmung 16 des Gehäuses 12 ist ebenfalls durch einen Deckel 17, der mittels Schrauben 18 befestigt ist, verschlossen. In das Gehäuse 12 sowie den Deckel 17 sind nur teilweise dargestellte Leitungen 20 und 20′ eingearbeitet, über die von dem Drehverteiler 33 dem Spannfutter 3 Druckmittel zuführbar sind. Mit Hilfe von Schrauben 19 ist das Gehäuse 12 an einem in den Maschinenspindelstock 2 eingesetzten Ring 6 befestigt.

Werden die Gewindespindeln 25 mittels der als elektrische Stellmotore 21 ausgebildeten Stellglieder 11 in Drehrichtung versetzt, so werden die Muttern 31 je nach Drehrichtung axial nach rechts oder links verstellt und die mit diesen fest verbundenen in Ausnehmungen 62 einer in den Maschinenspindelstock 2 eingesetzten Führungsstange 61 verschiebbar geführten Zugstangen 63 werden in gleicher Weise vor- oder zurückgeschoben. Auf der Vorderseite des Maschinenspindelstockes 2 werden jedoch die axialen Verstellbewegungen der Zugstangen 63 in radialer Richtung umgelenkt und der Spannkörper 41 wird in entsprechender Weise beeinflußt, so daß das an diesem befestigte Spannfutter 3 und somit das Werkstück 10 radial verstellt werden.

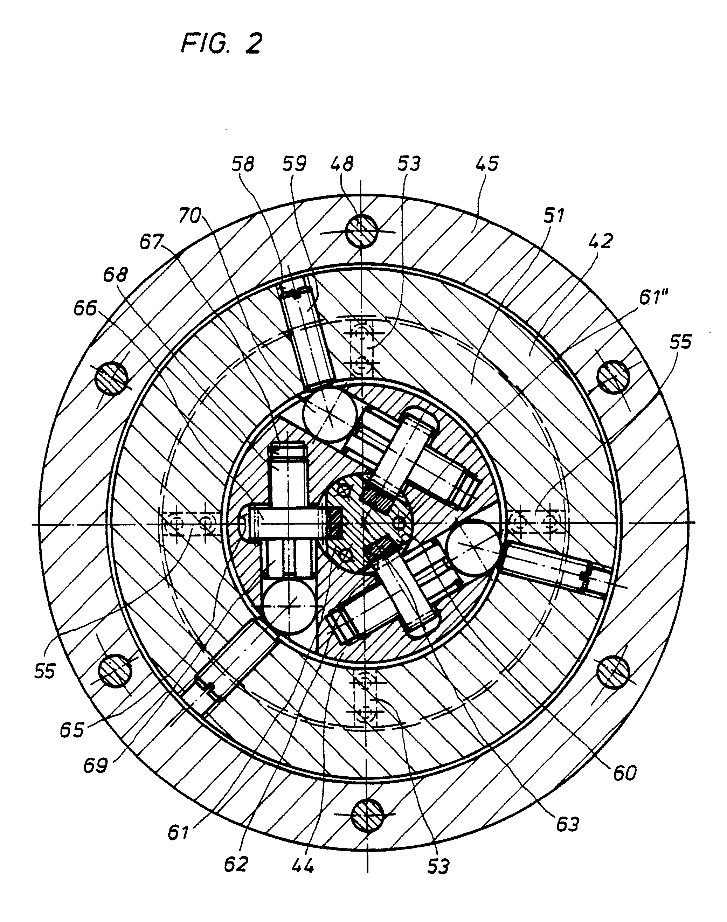

Um dies zu bewerkstelligen, sind, wie dies in Figur 1 b sowie in Figur 2 dargestellt ist, die Zugstangen 63 in ihrem vorderen Bereich jeweils mit einer Verzahnung 64 ausgestattet, in die in dem aus einer Scheibe 44 sowie einem Ring 45, die durch Schrauben 46 miteinander verbunden sind, zusammengesetzte Gehäuse 43 angeordnete Zahnräder 66 eingreifen. Die Zahnräder 66 sind hierbei in in die Scheibe 44 eingearbeitete Ausnehmungen 65 eingesetzt und über eine Keilwellenverzahnung 69 drehfest mit einer tangential zu einem Grundkreis angeordneten Gewindespindel 68 verbunden, die in Gewindebohrungen 67 eingeschraubt sind. Die axiale Verstellbewegungen der Zugstangen 63 werden somit mit Hilfe der Zahnräder 66, in denen die Gewindespindeln 68 mittels der Keilwellenverzahnungen 69 verschiebbar sind, wiederum in axiale Bewegungen der Gewindespindeln 68 umgelenkt. Und über Kugeln 70 als Zwischenglieder wirken die Gewindespindeln 68 auf den Spannkörper 41 ein, so daß dieser je nach Verstellrichtung der Gewindespindeln 68 radial verstellt wird. Mit Hilfe von in Gewindebohrungen 58 der Aufnahmescheibe 42 eingesetzter Justierbolzen 59 können Fertigungstoleranzen der an der Kraftübertragung beteiligten Bauteile leicht ausgeglichen werden.

Die drehfeste Verbindung der Aufnahmescheibe 42 mit dem Maschinenspindelstock 2 bei radialer Verstellung wird mittels eines Mitnahmeringes 51 bewerkstelligt. Dazu sind an der Scheibe 44 des Gehäuses 43 einander gegenüberliegend zwei Nutensteine 53 angebracht, die in in den Mitnahmering 51 eingearbeitete radial gerichtete Nuten 52 eingreifen und die Aufnahmescheibe 42 ist ebenfalls mit zwei weiteren um 90° versetzt zu den Nutensteinen 53 angeordneten Nutensteinen 55 versehen, die in in den Mitnahmering 51 eingearbeiteten Nuten 54 geführt sind. Auf diese Weise kann der Mitnahmering 51, der mittels eines Lagers 56 an der Scheibe 44 und mittels eines Lagers 57 an dem Ring 45 abgestützt ist, da die Nutensteine 53 und 55 wie ein Kreuzgelenk wirksam sind, radiale Bewegungen ausführen.

Das den Spannkörper 41 und die diesem zugeordneten Verstellglieder aufnehmenden Gehäuse 43 ist mittels Schrauben 48 an einer Scheibe 47 befestigt, die über Schrauben 49 mit dem Maschinenspindelstock 2 fest verbunden ist, so daß von diesem der Spannkörper 41 und das auf diesem aufgesetzte Spannfutter 3 angetrieben werden. Durch eine Dichtung 50 ist der Spalt zwischen dem Spannkörper 41 und dem Ring 45 des Gehäuses 43 abgedichtet.

Die die Zugstangen 63 aufnehmende Führungsstange 61 ist mittels eines aufgeschrumpften Bundes 7 in dem auf der Rückseite des Maschinenspindelstockes 2 angebrachten Ring 6 abgestützt, auf der Vorderseite ist dagegen die Führungsstange 61 in einer in die Scheibe 47 eingearbeiteten Paßbohrung 60 zentriert Des weiteren sind in die Führungsstange 61, die die Paßbohrung 60 sowie eine weitere in der Scheibe 44 eingearbeitete Bohrung 60' durchgreift, Kanäle 61'' eingearbeitet, die mit den Zuführungskanälen 20' des Deckels 17 kommunizieren. Und über einen auf der Vorderseite aufgeschraubten Deckel 61', in dem sich die Kanäle 61'' fortsetzen und in das Kraftspannfutter 3 münden, ist diesem Druckmittel zuführbar.

Zur individuellen Betätigung der Stellelemente 11, um somit das Werkstück 10 durch Radialverstellung des Spannkörpers 41 in radialer Richtung leicht ausrichten zu können, ist der Vorrichtung 1 eine Recheneinheit 71 zugeordnet, die durch einen mit dem Werkstück 10 zusammenwirkenden Taster 72 sowie durch eine Drehwinkelmeßeinrichtung 74 beeinflußbar ist. Der Taster 72 sowie die Drehwinkelmeßeinrichtung 74, die aus einem in dem Gehäuse 12 vorgesehenen Impulsgeber 75 und einem mit diesem zusammenwirkenden Sensor 76 besteht, sind jeweils über Steuerleitungen 73 bzw. 77 an die Recheneinheit 71 angeschlossen, von der wiederum über Steuerleitungen 78 die entsprechenden Befehle den Stellelementen 11 zuführbar sind.

In der Recheneinheit 71 werden die von dem Taster 72 sowie der Drehwinkelmeßeinrichtung 74 abgegebenen Impulse ausgewertet und die Stellelemente 11 werden jeweils derart angesteuert, daß dem Spannkörper 41 in der Weise radial verstellt wird, daß die Außenmantelfläche des in dem Kraftspannfutter 3 eingespannten Werkstückes 10 rund läuft. Bei einem Ausrichtvorgang werden eines oder zwei der Stellelemente 11 vor- und die anderen zurückverstellt, so daß auch die über die Getriebemittel mit den Stellelementen 11 trieblich verbundenen Gewindespindeln 68 vor- und zurückgestellt werden und die Aufnahmescheibe 41 dadurch in radialer Richtung ausgerichtet wird.

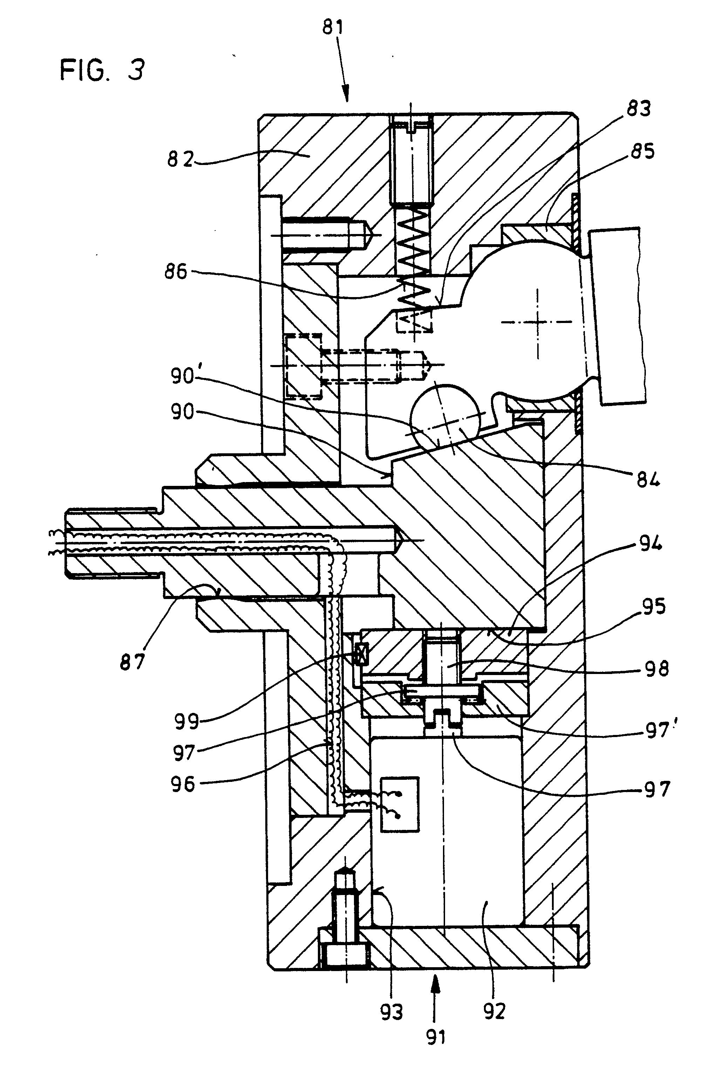

Bei der Spannvorrichtung 81 nach Figur 3 wird ein den nicht dargestellten Spannbacken gemeinsames Betätigungsglied 90 in deren Richtung ausgelenkt. Dazu dienen diametral zu Kipphebeln 83, die mit den Spannbacken verbunden sind, in einem Futterkörper 82 eingesetzte Stellelemente 91, die auf das Betätigungsglied 90 einwirken.

Die axiale Verstellbewegung des Betätigungsgliedes 90 wird mittels an diesem angearbeiteten Schrägflächen 90' auf die in Lagerschalen 85 gehaltenen Kipphebel 83, an denen Rollen 84 als Gelenkstücke angebracht sind, übertragen und die Kipphebel 83 werden entgegen der Kraft von Rückstellfedern 86 verschwenkt. Sollte sich jedoch zeigen, daß das eingespannte Werkstück nicht rund läuft, wird das über eine ballige Fläche 87 in dem Futterkörper 82 abgestützte Betätigungsglied 90 in Richtung eines der Kipphebel 83 um eine definierte Wegstrecke aus der Mitte verstellt.

Die Stellelemente 91 sind bei der Spannvorrichtung 81 durch Schrittmotore 92 gebildet, die in radialen Bohrungen 93 des Futterkörpers 82 eingesetzt sind und denen die elektrische Energie über Leitungen 96 zuführbar ist. Die Abtriebswelle 97 eines jeden Schrittmotors 92 ist trieblich mit einer Gewindespindel 98 verbunden, die mittels einer Scheibe 97 drehbar gelagert ist. Außerdem ist die Gewindespindel 98 in einem Gleitstück 94 abgestützt, das mittels eines Keils 99 drehfest gehalten ist.

Wird einer der Schrittmotore 92 erregt, so wird, da die Drehbewegung der Abtriebswelle 97 umgesetzt wird, das Gleitstück 94 axial in Richtung des Betätigungsgliedes 90 verschoben und gegen eine Gleitfläche 95 gedrückt, so daß dieses entsprechend der Verstellbewegung des Gleitstückes 94 ausgelenkt wird.

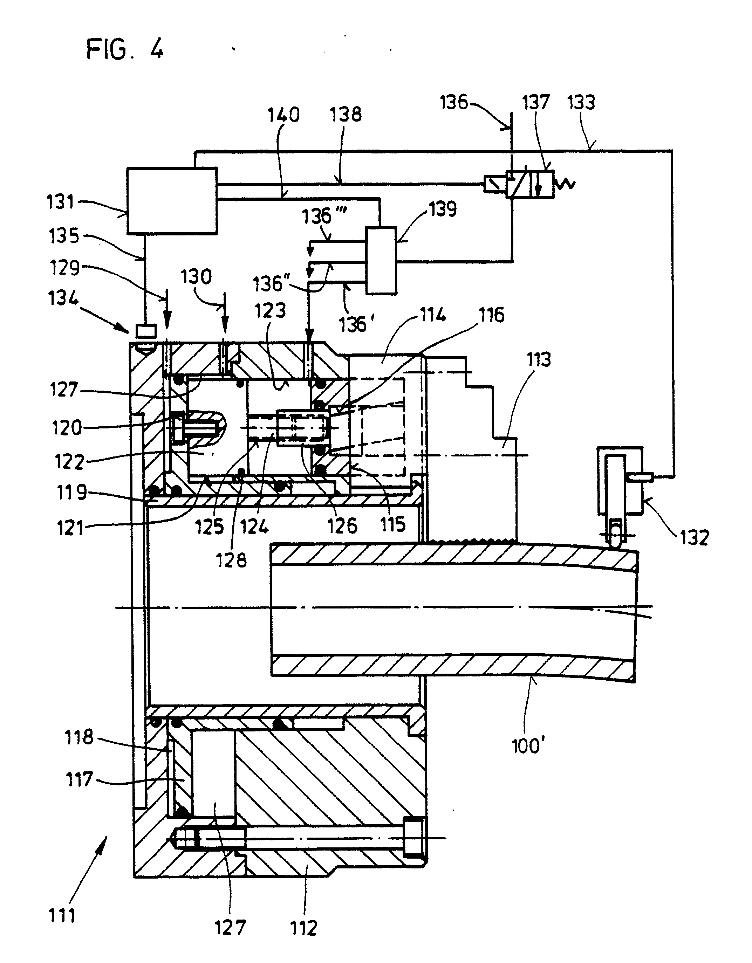

Das in Figur 4 dargestellte und mit 111 bezeichnete Kraftspannfutter dient zur Einspannung eines verbogenen Werkstückes 100′ und besteht aus in einem Futterkörper 112 in radial gerichteten Nuten 115 eingesetzte Grundbacken 114 und mit diesen fest verbundenen Spannbacken 113, mittels denen das Werkstück 100′ zunächst zentrisch in dem Spannfutter 111 einzuspannen ist. Zur Betätigung der Grundbacken 114 ist ein Kolben 117 vorgesehen, der über Keilstangen 116 mit den Grundbacken 114 in Triebverbindung steht.

Wird dem Druckraum 118 Druckmittel zugeführt, so wird der Kolben 117, der auf einer Büchse 119 axial verschiebbar geführt ist, nach rechts bewegt. Ober die Keilstangen 116 wird diese Axialbewegung umgelenkt und die Grundbacken 114 und damit die Spannbacken 113 werden radial verstellt und das Werkstück 100′ wird zentrisch in dem Kraftspannfutter 111 eingespannt.

Um eine Lageänderung des Werkstückes 100′ in dem Kraftspannfutter 111 vornehmen zu können, sind die Spannbacken 113 einzeln verstellbar. Dazu ist jeder Keilstange 116 ein Stellglied 121 in Form eines pneumatisch ansteuerbaren Schrittmotors 122 zugeordnet, die in in den Futterkörper 112 eingearbeitete sich in axialer Richtung erstreckende Ausnehmungen 123 eingesetzt und z.B. mittels Schrauben 120 an dem Kolben 117 befestigt sind. Die Abtriebswellen 124 der Schrittmotore 122 sind jeweils mit Gewinde 125 versehen und greifen in eine an der Keilstange 116 angebrachte Hohlspindel 126 ein, so daß eine Drehbewegung der Abtriebswelle 124 eines Schrittmotors 122 in eine axiale Bewegung umgesetzt wird.

Bei einer Druckmittelzuführung in den Druckraum 118 über die Druckleitung 129 werden die Schrittmotore 122 und die Keilstangen 116 durch den Kolben 117 als Ganzes verschoben und bei einer Druckmittelzuführung über die Druckleitung 130 in den Druckraum 127 werden die Stellmotore 122 zusammen mit dem Kolben 117 zwar in dessen Endstellung zurückgeführt, gleichzeitig werden die Schrittmotore 122 aber in ihre Ausgangsstellung zurückgedreht, da deren Einlaßkanäle an den Druckraum 127 angeschlossen sind, so daß die Abtriebswellen 124 aus den Hohlspindeln 126 teilweise herausgeschraubt werden.

Beim Ausrichten des Werkstückes 100′, das im Bereich eines mit Abstand zu dem Kraftspannfutter 111 angeordneten Tasters 132 zentrisch laufen soll, um in dieses z. B. ein Gewinde einzuschneiden, wird in der Weise verfahren, daß durch den Taster 132 über eine Steuerleitung 133 eine Recheneinheit 131 angesteuert wird, an die des weiteren eine an dem Spannfutter 111 angebrachte Drehwinkelmeßeinrichtung 134 angeschlossen ist. Mit der Recheneinheit 131 ist ferner über eine Leitung 138 ein in eine Druckleitung 136 eingesetztes Steuerventil 137 verbunden, mittels dem kurzzeitig Druckmittel einem Verteilerventil 139 zuführbar ist. Über Druckleitungen 136′, 136″ und 136‴ ist das Verteilerventil 139 wahlweise an einen der Druckräume 123 anschließbar, die jeweils einem der Stellglieder 121 zugeordnet und mittels Dichtungen 128 gegenüber dem Druckraum 127 abgedichtet sind. Der entsprechende Schrittmotor wird dadurch derart betätigt, daß die mit diesen verbundene Spannbacke zurückgenommen wird.

Beim Ausrichten des Werkstückes 101′ wird bei dessen langsamer Rotation von dem Taster 132 an der sogenannten tiefsten Stelle ein Impuls erzeugt und über die Steuerleitung 133 der Recheneinheit 131 zugeleitet. Mit Hilfe der Drehwinkelmeßeinrichtung 134, die über eine Steuerleitung 135 ebenfalls mit der Recheneinheit 131 verbunden ist, wird gleichzeitig die Winkellage des Kraftspannfutters 111 ermittelt und über das Verteilerventil 139, das über eine Leitung 140 ebenfalls an die Recheneinheit 131 angeschlossen ist, wird bei kurzzeitig geöffnetem Ventil 137 einem der Druckräume 123, der von der Recheneinheit ausgewählt wurde, Druckmittel zugeleitet. Der betreffende Schrittmotor wird dadurch um einen definierten Schritt zurückgedreht und der zugeordnete Spannbacken wird zurückgenommen, die beiden anderen Spannbacken dagegen werden aber durch den Kolben 117 nachgestellt, so daß das Werkstück 100′ in dem Kraftspannfutter 111 in Richtung des zurückgenommenen Backens verstellt wird. Dieser Vorgang wird so lange wiederholt, bis das Werkstück 100′ im Bereich des Tasters 132 ohne Schlag rund läuft.

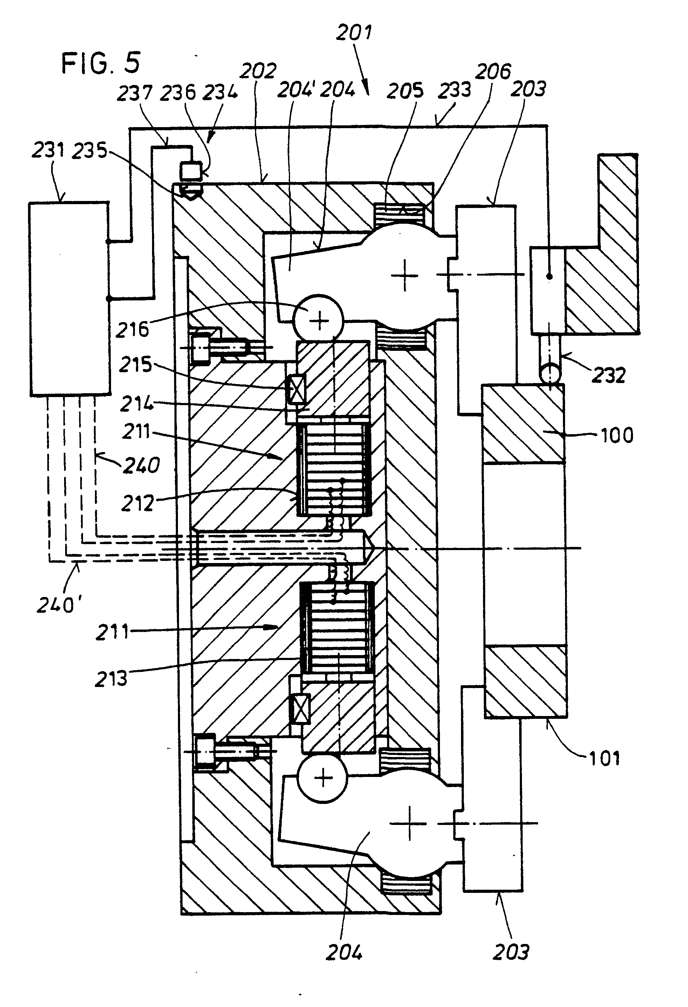

Die in Figur 5 dargestellte Spannvorrichtung 201 dient zur Halterung eines Werkstückes 100 auf einer Drehmaschine und ist als Zwei-Backen-Spannfutter ausgebildet. Die Spannvorrichtung 201 weist dazu zwei diametral einander gegenüberliegend angeordnete prismatische Spannbacken 203 auf, die an in einem Gehäuse 202 gelagerten Kipphebeln 204 befestigt sind. Mittels einer in eine Ausnehmung 206 eingesetzten Lagerschale 205 sind die Kipphebel 204 verschwenkbar gehalten.

Zur Betätigung der Kipphebel 204 sind Stellelemente 211 vorgesehen, und zwar ist jedem der Kipphebel 204 ein als piezoelektrischer Translator 212 ausgebildetes Stellelement 211 zugeordnet, die in radial gerichteten Ausnehmungen 213 des Gehäuses 202 eingesetzt sind. Über ein durch einen Keil 215 drehfest gehaltenes Druckstück 214 und eine an dem inneren Ende 204' der Kipphebel 204 angebrachte Rolle 216 als Gelenkstück wirken die Stellelemente 211 einzeln auf die Kipphebel 204 ein.

Zur Ausrichtung der Außenmantelfläche 101 des Werkstückes 100 können die Stellelemente 211 gesondert, und zwar auch nachdem das Werkstück 100 eingespannt ist, in Abhängigkeit von einem unrunden Lauf betätigt werden. Dazu dient ein Taster 232, mittels dem die Außenmantelfläche 101 abgetastet wird, sowie eine Drehwinkelmeßeinrichtung 234, durch die ein evtl. nicht zentrisch umlaufender Bereich der Außenmantelfläche 101 zu bestimmen ist. Über Steuerleitungen 233 und 237 sind der Taster 232 sowie die Drehwinkelmeßeinrichtung 234 an eine Recheneinheit 231 angeschlossen, in der die Steuersignale auswertbar sind und mittels der die Stellelemente 211 mit elektrischer Energie versorgt werden. Die Drehwinkelmeßeinrichtung 234 besteht bei dem gezeigten Ausführungsbeispiel aus einer oder mehreren in das Gehäuse 202 eingearbeiteten Sacklochbohrungen 235 als Impulsgeber und einem ortsfest angeordneten Sensor 236, der als Näherungsschalter ausgebildet ist.

Entsprechend den von dem Taster 232 und der Drehwinkelmeßeinrichtung 234 bei einer oder mehreren vor Aufnahme der Bearbeitung des Werkstückes 100 vorzunehmenden Umdrehungen abgegebenen und in der Recheneinheit 231 ausgewerteten Impulse werden die an die Stellelemente 211 angelegten Spannungen über die Steuerleitungen 240 und 240' mehr oder weniger verändert, so daß die Lage des zwischen den beiden Spannbacken 203 eingespannten Werkstückes 100 in einer Achse verändert werden kann und dessen Außenmantelfläche 101 somit ausgerichtet wird. Beim Einspannen des Werkstückes 100 sind an die Stellelemente 211 selbstverständlich jeweils die gleichen Spannungen anzulegen, um zunächst eine gleichmäßige Zustellung der Spannbacken 203 und somit eine zentrische Einspannung zu bewirken.

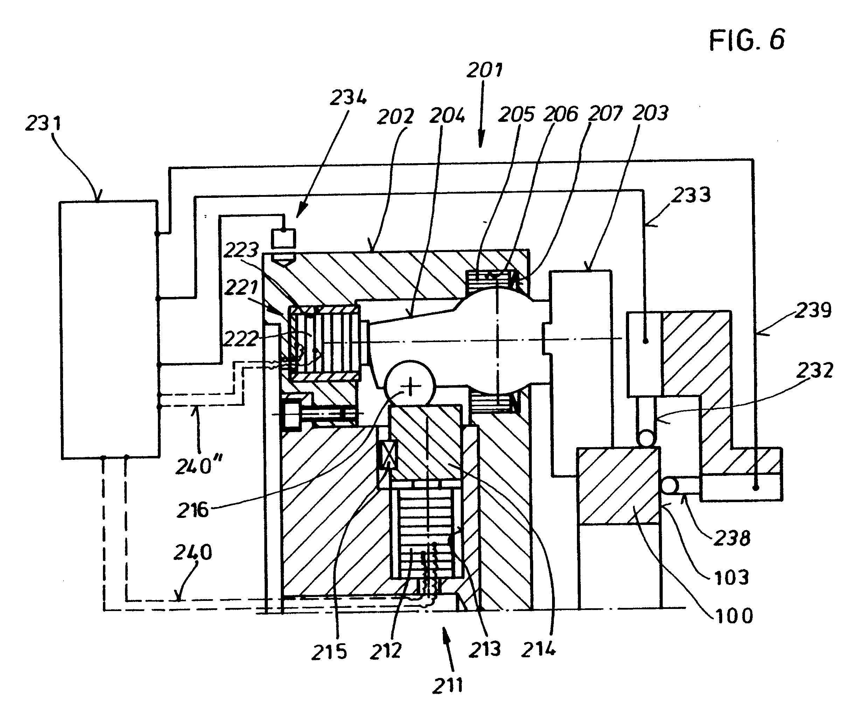

Bei der Ausgestaltung nach Figur 6 kann auch der Planlauf der Stirnfläche 103 des Werkstückes 100 überprüft und dieses gegebenenfalls entsprechend axial verstellt werden.

Dazu dient ein weiterer Taster 238, der an der Stirnfläche 103 anliegt und über eine Steuerleitung 239 ebenfalls an die Recheneinheit 231 angeschlossen ist. Außerdem sind Stellelemente 221 vorgesehen, die in axialer Richtung auf die Kipphebel 204 einwirken und die über Steuerleitungen 240" mit der Recheneinheit 231 verbunden sind.

Die wiederum als piezoelektrische Translatoren 222 ausgebildeten Stellelemente 221 sind in axial gerichteten Bohrungen 223 des Gehäuses 202 eingesetzt, des weiteren ist die Lagerschale 205 der Kipphebel 204 entgegen der Kraft einer Feder 207 axial verschiebbar, so daß entsprechend der an die Stellelemente 221 angelegten Spannung der eine oder andere der Kipphebel 204 in Richtung der Spannbacken 203 mehr oder weniger vorgeschoben wird und dadurch der Planlauf der Stirnfläche 103 des Werkstückes 100 beeinflußt werden kann.

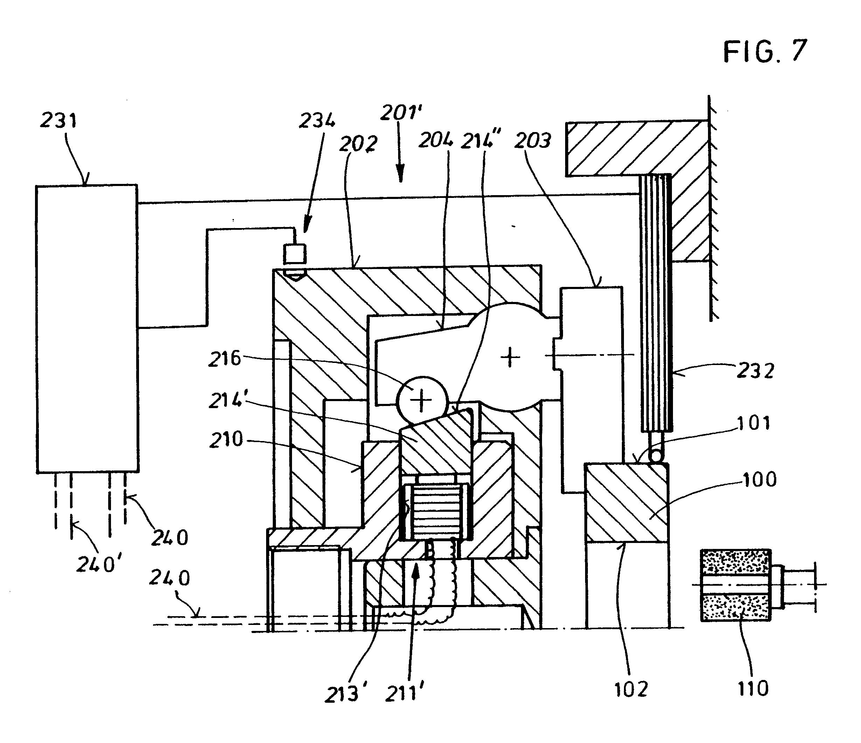

Die Stellelemente 211' können auch, wie dies bei der Spannvorrichtung 201' nach Figur 7 dargestellt ist, in einem Betätigungsglied 210 eingesetzt sein, mittels dem durch eine Axialverschiebung die Spannbacken 203 gemeinsam betätigt werden und somit die Einspannung des Werkstückes 100 bewerkstelligt wird. Dazu sind in das Betätigungsglied 210 radial gerichtete Bohrungen 213' eingearbeitet, in denen die Stellglieder 211' eingesetzt sind, und die Stirnflächen 214" der Druckstücke 214' sind in Achsrichtung geneigt ausgerichtet, so daß durch eine axiale Zustellbewegung des Betätigungsgliedes 210 die Rollen 216 radial verstellt und die Kipphebel 204 somit verschwenkt werden.

Wird aber mit Hilfe des Tasters 232 und der Drehwinkelmeßeinrichtung 234 festgestellt, daß die Außenmantelfläche 101 des Werkstückes 100 nicht zentrisch umläuft, so werden die Stellelemente 211' an unterschiedliche Spannungen gelegt, so daß die Druckstücke 214' nach innen oder außen verschoben werden und das Werkstück 100 exakt mittig ausgerichtet wird. Dessen Innenbohrung 102 kann sodann auf einer Schleifmaschine mit Hilfe eines Schleifwerkzeuges 110 schlagfrei zu der Aussenmantelfläche 101 bearbeitet werden.

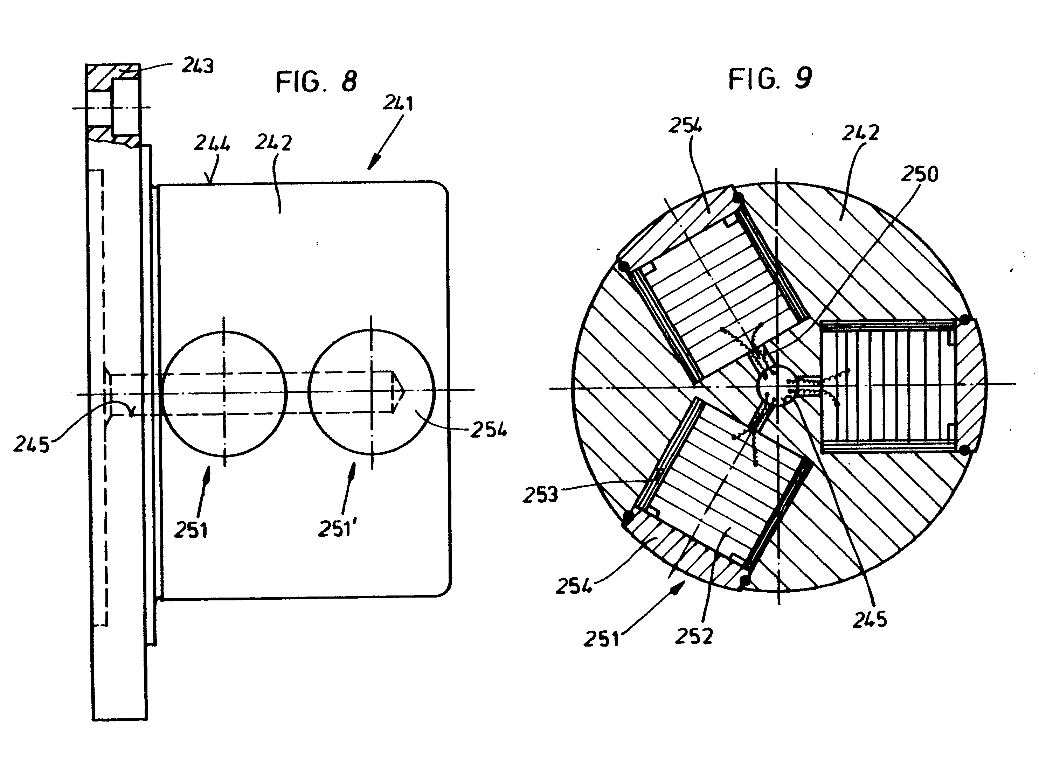

Die in den Figuren 8 und 9 gezeigte Spannvorrichtung ist als Spanndorn 241 ausgebildet. In einem Gehäuse 242, das mittels eines Flansches 243 an einer Drehmaschine zu befestigen ist, sind hierbei jeweils zwei Stellelemente 251 und 251' axial hintereinander in Reihe angeordnet. Über Druckstücke 254, deren Außenflächen der Außenmantelfläche 244 des Gehäuses 242 angepaßt ist, wirken die in Bohrungen 253 des Gehäuses 242 eingesetzten piezoelektrischen Translatoren 252 auf ein einzuspannendes Werkstück ein, so daß dieses auch in seiner Längsrichtung ausgerichtet werden kann. Über Steuerleitungen 250, die über eine Bohrung 245 zu den Stellelementen 251, 251' geführt sind, sind diese an eine Stromquelle angeschlossen.

Selbstverständlich ist es aber auch möglich, nur einen Satz gleichmäßig über den Umfang verteilt angeordnete Stellelemente 251 und 251′ in dem Spanndorn 241 vorzusehen. Das aufzuspannende Werkstück wird in diesem Fall plan an dem Flansch 243 ausgerichtet.

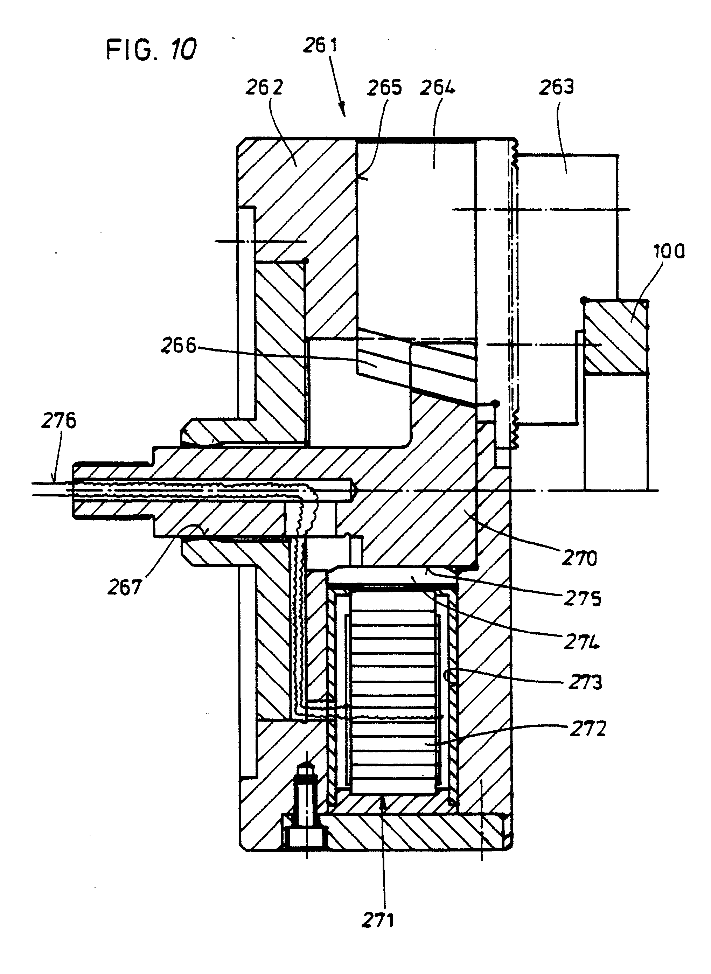

Bei der Spannvorrichtung 261 nach Figur 10 wirken in einem Futterkörper 262 eingesetzte Stellelemente 271 auf ein Betätigungsglied 270 ein, mittels dem über Keilhaken 266 in Nuten 265 des Futterkörpers 262 radial verstellbar geführte Grundbacken 264 gemeinsam trieblich verbunden sind. Auf den Grundbacken 264 sind Spannbacken 263 aufgeschraubt, mittels denen das Werkstück 100 einzuspannen ist.

Um das Werkstück 100 auszurichten, wird bei diesem Ausführungsbeispiel das Betätigungsglied 270 ausgelenkt. Dies wird in der Weise bewerkstelligt, daß das Betätigungsglied 270 über eine ballige Fläche 267 an dem Futterkörper 262 abgestützt ist und daß die als piezoelektrische Blocktranslatoren 272 ausgebildeten Stellelemente 271 in diametral zu den Grundbacken 264 angeordneten, in den Futterkörper 262′ eingearbeiteten Bohrungen 273 eingesetzt sind. Mittels Gleitstücken 274, die an Gleitflächen 275 des Betätigungs-gliedes 270 anliegen, wirken die über Steuerleitungen 276 an Spannung anzulegenden Stellelemente 271 auf das Betätigungsglied 270 ein, so daß dieses je nach Erregung mehr oder weniger ausgelenkt und das Werkstück 100 somit ausgerichtet wird.

**Ansprüche**

1. Vorrichtung zur Halterung eines auf einer Drehmaschine, insbesondere einer Schleifmaschine, zu bearbeitenden Werkstückes, das mittels eines als Aufnahmescheibe, als mit antreibbaren in einem Gehäuse eingesetzten Spannbacken versehene Spannfutter, als Spanndorn od.dgl. ausgebildeten Spannkörper gehalten ist,
**dadurch gekennzeichnet,**
daß dem Spannkörper (Aufnahmescheibe 42) und/oder dessen Spannbacken und/oder den Betätigungsgliedern (90; 270) der Spannbacken (113; 203; 263) gesonderte Stellelemente (11; 91; 121; 211; 221; 251; 271) zugeordnet sind, die unabhängig voneinander elektrisch, pneumatisch oder hydraulisch betätigbar und/oder ansteuerbar sind und zum Ausrichten und/oder Einspannen des Werkstückes (10; 100; 100′) unmittelbar oder über Zwischenglieder auf den Spannkörper (41) dessen Spannbacken (113; 203) und/oder deren Betätigungsglieder (90; 270) einwirken.
2. Vorrichtung nach Anspruch 1,
**dadurch gekennzeichnet,**
daß die Stellelemente (11) durch drei parallel zur Längsachse (A) des Spannkörpers (Aufnahmescheibe 42) und jeweils um 120° zueinander versetzt angeordnete elektrische Schritt- oder Stellmotore (21) gebildet sind, deren Verdrehbewegungen über Getriebemittel (Gewindespindel 25, Mutter 31, Zugstange 63, Zahnrad 66, Gewindespindel 68) in radiale Verstellbewegungen umlenkbar sind.
3. Vorrichtung nach Anspruch 2,
**dadurch gekennzeichnet,**
daß die Schritt- oder Stellmotore (21) in einem auf der Rückseite des Maschinenspindelstockes (2) angeordneten Gehäuse (12) eingesetzt sind.
4. Vorrichtung nach Anspruch 2 oder 3,
**dadurch gekennzeichnet,**
daß den Schritt- oder Stellmotoren (21) jeweils eine verdrehbar gelagerte und durch diese antreibbare Gewindespindel (25) zugeordnet ist, deren Verdrehbewegungen mittels einer Mutter (31), die fest mit einer durch den Maschinenspindelstock (2) hindurchgeführten Zugstange (63) verbunden ist, in eine axiale Verstellbewegung umsetzbar ist.
5. Vorrichtung nach Anspruch 4,
**dadurch gekennzeichnet,**
daß die von den Stellmotoren (21) angetriebene Welle (22) über eine Federraste (27) mit der Gewindespindel (25) in Triebverbindung steht.
6. Vorrichtung nach einem oder mehreren der Ansprüche 1 bis 5,
**dadurch gekennzeichnet,**
daß die Zugstangen (63) jeweils mit einem achssenkrecht zu diesen angeordneten, in einem auf der Vorderseite des Maschinenspindelstockes (2) in einem Gehäuse (43) eingesetzten Zahnrad (66) in Triebverbindung stehen, mittels denen je ein auf den Spannkörper (41) einwirkendes Verstellglied (Gewindespindel 68) betätigbar ist.
7. Vorrichtung nach Anspruch 6,
**dadurch gekennzeichnet,**
daß die Verstellglieder jeweils durch eine in einer Gewindebohrung (67) in deren Achsrichtung verstellbare und tangential zu einem Grundkreis angeordneten Gewindespindel (68) ausgebildet sind, die unmittelbar oder z. B. über Kugeln (70) als Zwischenglieder auf den Spannkörper (41) einwirken.
8. Vorrichtung nach Anspruch 7,
**dadurch gekennzeichnet,**
daß den Gewindespindeln (68) oder den von diesen verschiebbaren Zwischengliedern (Kugeln 70) jeweils ein in den Spannkörper (41) eingeschraubter verstellbarer Justierbolzen (59) zugeordnet ist.
9. Vorrichtung nach Anspruch 7,
**dadurch gekennzeichnet,**
daß die Gewindespindeln (68) über Keilverzahnungen (69) verschiebbar in den Zahnrädern (66) geführt sind.
10. Vorrichtung nach einem oder mehreren der Ansprüche 1 bis 9,
**dadurch gekennzeichnet,**

daß der Spannkörper (41) als radial verstellbar gelagerte in dem die Zahnräder (66) und die Gewindespindeln (68) aufnehmenden Gehäuse (43) eingesetzte Aufnahmescheibe (42) ausgebildet ist, an der das Werkstück unmittelbar oder mittels eines Spannfutters (3) oder dgl. als Zwischenglied gehalten ist.

11. Vorrichtung (nach Anspruch 10,
dadurch gekennzeichnet,
daß zur radial verstellbaren Lagerung der Aufnahmescheibe (42) ein Mitnahmering (51) vorgesehen ist, durch den mittels zweier einander gegenüberliegend angeordneter Nutensteine (53) das Gehäuse (Scheibe 44) und mittels zweier weiterer um 90° versetzt angeordneter Nutensteine (55) die Aufnahmescheibe (42) verdrehfest und radial verstellbar miteinander verbunden sind.

12. Vorrichtung nach Anspruch 1,
dadurch gekennzeichnet,
daß die Stellelemente (211; 221; 251; 271) als piezoelektrische Blocktranslatoren (212; 222; 252; 272) ausgebildet sind.

13. Vorrichtung nach Anspruch 1,
dadurch gekennzeichnet,
daß die Stellelemente (91; 121) als elektrische, pneumatische oder hydraulische Schritt- oder Stellmotore (92; 122) ausgebildet sind, deren Abtriebswellen (97; 124) jeweils über eine Gewindespindel (98; 126) mit einem radial oder axial verstellbaren auf das Betätigungsglied (90) der Spannbacken oder auf einen Spannbacken (113) einwirkendes Zwischenglied (Gleitstück 94; Keilstange (116) verbunden sind.

14. Vorrichtung nach Anspruch 13,
dadurch gekennzeichnet,
daß die Stellelemente (211) in radial gerichteten Ausnehmungen (213) des Gehäuses (202) eingesetzt und jeweils über einen gelenkig gelagerten Kipphebel (204) als Zwischenglied mit den Spannbacken (203) trieblich verbunden sind.

15. Vorrichtung nach Anspruch 13 oder 14,
dadurch gekennzeichnet,
daß den als piezoelektrische Blocktranslatoren (212) ausgebildeten Stellelementen (211) jeweils ein radial verschiebbares Druckstück (214) zugeordnet ist, das über ein Gelenkstück z.B. in Form einer Rolle (216) oder dgl. mit dem inneren Ende (204') des Kipphebels (204) in Triebverbindung steht.

16. Vorrichtung nach Anspruch 12 oder 13,
dadurch gekennzeichnet,
daß zum planparallelen Ausrichten des Werkstükkes (100) Stellelemente (221) in achsparallelen Ausnehmungen (223) des Gehäuses (202) eingesetzt sind und auf die den Spannbacken (203) jeweils zugeordneten Zwischenglieder (Kipphebel 204) einwirken.

17. Vorrichtung nach Anspruch 16,

dadurch gekennzeichnet,
daß bei einer mit Kipphebel (204) als Zwischenglieder versehenen Vorrichtung (201) die Kipphebel (204) entgegen der Kraft einer Feder (207) jeweils mittels eines als piezoelektrischer Blocktranslator (222) ausgebildeten Stellelementes (221) parallel zur Längsachse des Gehäuses (203) verstellbar sind.

18. Vorrichtung nach Anspruch 17,
dadurch gekennzeichnet,
daß die Kipphebel (204) jeweils in einer Lagerschale (205) eingesetzt sind, die in Ausnehmungen (206) des Gehäuses (202) axial entgegen der Kraft der Feder (207) verschiebbar gehalten sind.

19. Vorrichtung nach einem oder mehreren der Ansprüche 1, 12 oder 13,
dadurch gekennzeichnet,
daß bei einer als Spanndorn (241) ausgebildeten Vorrichtung die Stellelemente (251; 251') in radial gerichteten Ausnehmungen (253) des Gehäuses (242) eingesetzt und jeweils über ein der Außenmantelfläche des Spanndorns (241) angepaßtes Druckstück (254) als Spannbacken unmittelbar auf das Werkstück einwirken.

20. Vorrichtung nach Anspruch 19,
dadurch gekennzeichnet,
daß zwei oder mehrere Spannbacken oder Stellelemente (251; 251') in Achsrichtung des Spanndorns (241) hintereinander angeordnet sind.

21. Vorrichtung nach einem oder mehreren der Ansprüche 1, 12 oder 13,
dadurch gekennzeichnet,
daß die Stellelemente (91; 271) diametral den Spannbacken (Kipphebel 83; Spannbacken 263) gegenüberliegend in dem Gehäuse (82; 282) angeordnet sind und über Gleitstücke (94; 274) oder dgl. auf das vorzugsweise pendelnd gelagerte Betätigungsglied (290; 270) der Spannbacken (283; 263) einwirken.

22. Vorrichtung nach einem oder mehreren der Ansprüche 1 bis 11,
dadurch gekennzeichnet,
daß die Stellelemente (11; 91; 121; 211; 221; 251; 271) gemeinsam oder einzeln elektrisch, pneumatisch oder hydraulisch ansteuerbar sind.

23. Vorrichtung nach einem oder mehreren der Ansprüche 1 bis 22,
dadurch gekennzeichnet,
daß die Stellelemente (11; 91; 121; 221; 251; 271) in Abhängigkeit von dem Rundlauf und/oder dem Planlauf des Werkstückes (10; 100; 100') elektrisch, pneumatisch oder hydraulisch ansteuerbar sind.

24. Vorrichtung nach Anspruch 23,
dadurch gekennzeichnet,
daß zur Ermittlung des Rundlaufes und/oder des Planlaufes eines eingespannten Werkstückes (10; 100; 100') jeweils ein (durch dieses steuerbarer Taster (72; 132; 232, 238;) vorgesehen ist, daß das Gehäuse (12; 112; 202) der Vorrichtung (1; 111; 201) mit einer Drehwinkelmeßeinrichtung (74; 134; 234) ausgestattet ist und daß die Steuersignale der Taster (72; 132; 232; 238) und der Drehwinkelmesseinrichtung (74; 134; 234) in einer Recheneinheit (71; 131; 231) auswertbar sind.

25. Vorrichtung nach Anspruch 24,

**dadurch gekennzeichnet,**

daß die Drehwinkelmeßeinrichtung (74; 134; 234) durch einen oder mehrere in das Gehäuse (12; 112; 202) eingesetzte Impulsgeber (75; 235), beispielsweise in Form von in dieses eingearbeiteten Bohrungen oder aufgesetzte Nocken, gebildet sind, denen ein ortsfest angeordneter an die Recheneinheit (71; 131; 231) angeschlossener z. B. als Näherungsschalter ausgebildeter Empfänger (76; 236) zugeordnet ist.

FIG. 1a

FIG. 1b

FIG. 2

FIG. *3*

FIG. 4

FIG. 5

FIG. 6

EP 0 415 040 A2

FIG. 7

EP 0 415 040 A2

FIG. 8

FIG. 9

EP 0 415 040 A2

FIG. *10*